(19) Europäisches Patentamt / European Patent Office / Office européen des brevets

(11) **EP 1 865 594 A2**

(12) **EUROPEAN PATENT APPLICATION**

(43) Date of publication:
**12.12.2007 Bulletin 2007/50**

(51) Int Cl.:
*H02P 6/08* *(2006.01)*

(21) Application number: **07011394.9**

(22) Date of filing: **11.06.2007**

| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | • **Endo, Shuji**<br> **Maebashi-shi**<br> **Gunma 371-8527 (JP)**<br>• **Kovudhikulrungsri, Lilit**<br> **Maebashi-shi**<br> **Gunma 371-8527 (JP)** |
|---|---|
| (30) Priority: **09.06.2006 JP 2006161297** | (74) Representative: **Grünecker, Kinkeldey, Stockmair & Schwanhäusser**<br>**Anwaltssozietät**<br>**Maximilianstrasse 58**<br>**80538 München (DE)** |
| (71) Applicant: **NSK Ltd.**<br> **Tokyo 141-8560 (JP)** | |
| (72) Inventors:<br>• **Sakaguchi,Toru**<br> **Maebashi-shi**<br> **Gunma 371-8527 (JP)** | |

(54) **Control method for motor and controller for motor**

(57)     This invention provides a control method for a motor that calculates a voltage command value based on a difference between a current command value and a current detected value and controls a PWM based on the voltage command value.

The control method includes steps of: detecting a failure or an undetectable state of a current detecting system; obtaining a current estimated value of a failure phase or an undetectable state phase by using the current detected value except the failure phase or the undetectable state phase when the failure or the undetectable state is detected; and continuously controlling the motor by using the current estimated value.

*FIG. 1*

EP 1 865 594 A2

**Description**

This application is based on and claims the benefit of priority from the prior Japanese Patent Application No. 2006-161297, filed on June 9, 2006, the entire content of which is hereby incorporated by reference.

BACKGROUND OF THE INVENTION

1. Technical Field

The present invention relates to a control method and a controller for a motor, and more particularly to a control method and a controller for a motor with high reliability that can continuously control a motor when a failure or an abnormality is generated in one current detecting system and are most suitably applied to a control of an electric power steering.

2. Background Art

As a control for a motor, for instance, there is an electric power steering device in which a steering device for a vehicle is driven by controlling the motor torque as a steering assist force. In the electric power steering device, the driving force of the motor is applied on a steering shaft or a rack shaft as the steering assist force by a transmitting mechanism such as a reduction gear using gear or a belt. In the above-described usual electric power steering device, to accurately generate an assist torque (a steering assist torque), the feedback control of a motor current is carried out. The feedback controller adjusts a motor applied voltage so as to reduce a difference between a current command value and a motor current detected value. The motor applied voltage is ordinarily adjusted by adjusting the duty ratio of a Pulse Width Modulation (PWM) control.

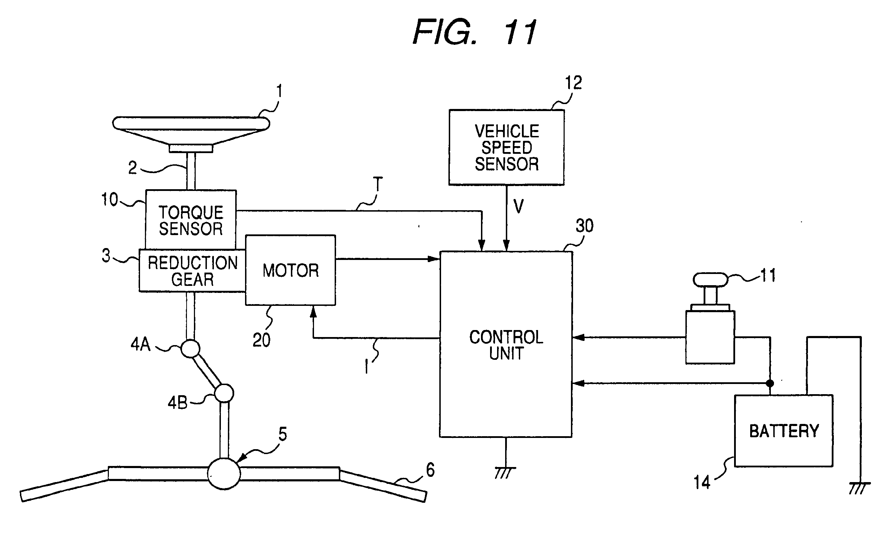

Here, the ordinary structure of the electric power steering device is shown in Fig. 11 and described. A column shaft 2 of a steering wheel 1 is connected to a tie rod 6 of a steered wheel via a reduction gear 3, universal joints 4A and 4B and a rack and pinion mechanism 5. In the column shaft 2, a torque sensor 10 is provided for detecting the steering torque of the steering wheel 1. A motor 20 for assisting the steering force of the steering wheel 1 is connected to the column shaft 2 through the reduction gear 3. To a control unit 30 for controlling the power steering device, an electric power is supplied from a battery 14 and an ignition key signal is inputted from an ignition key 11. The control unit 30 calculates a steering assist command value I as an assist command based on a steering torque T detected in the torque sensor 10 and a vehicle speed V detected in a vehicle speed sensor 12 and controls a current supplied to the motor 20 based on the calculated steering assist command value I.

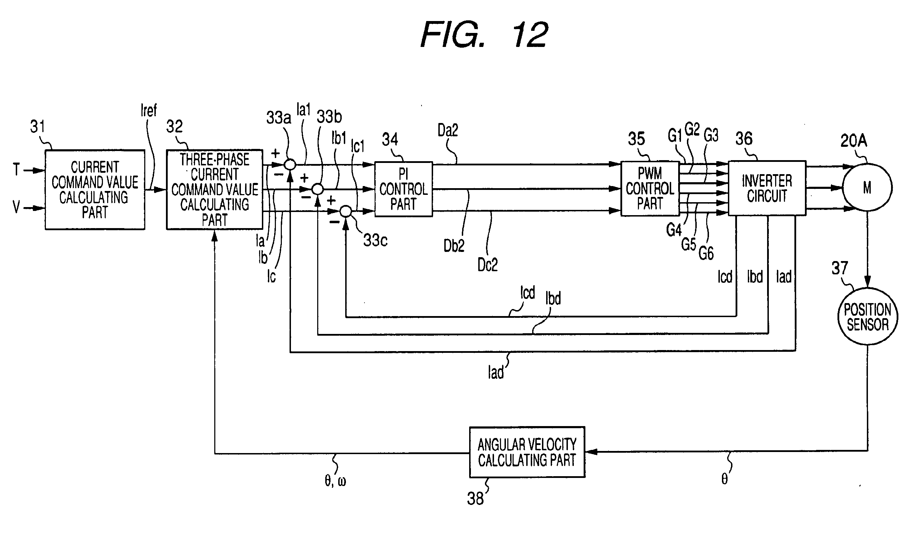

The control unit 30 is mainly comprised of a CPU (including an MPU or an MCU) and an ordinary function performed by a program in the CPU is shown in Fig. 12.

Referring to Fig. 12, the function and operation of the control unit 30 for driving and controlling a three-phase motor 20A are described below. The steering torque T detected in the torque sensor 10 and the vehicle speed V from the vehicle speed sensor or a Controller Area Network (CAN) are inputted to a current command value calculating part 31. The current command value calculating part 31 calculates a current command value Iref as a steering assist command based on the steering torque T and the vehicle speed V. The calculated current command value Iref is inputted to a three-phase current command value calculating part 32. To the three-phase current command value calculating part 32, a motor angle θ and a motor angular velocity ω are inputted to calculate current command values Ia to Ic of a to c phases. The current command values Ia to Ic are respectively inputted to a PI control part 34 so as to improve responsiveness via subtracting parts 33a to 33c. Voltage command values Da2, Db2 and Dc2 that are PI-controlled in the PI control part 34 are inputted to a PWM control part 35 for calculating a duty ratio. Gate driving signals G1 to G6 of the PWM calculated in the PWM control part 35 are inputted to an inverter circuit 36 to drive the three-phase motor 20A by the inverter circuit 36.

To the three-phase motor 20A, a position sensor 37 such as a resolver is attached. The motor angle θ from the position sensor 37 is inputted to an angular velocity calculating part 38 and the motor angle θ and the motor angular velocity ω calculated in the angular velocity calculating part 38 are inputted to the three-phase current command value calculating part 32. Further, in the inverter circuit 36, three-phase motor current supplied to the motor 20A is detected as current detected values Iad to Icd. The current detected values Iad to Icd are respectively inputted to the subtracting parts 33a to 33c as the subtracter, and thus feedback is made. Then, driving of the motor 20A is controlled by the current feedback control of the PWM based on the current command value Iref calculated in the current command value calculating part 31.

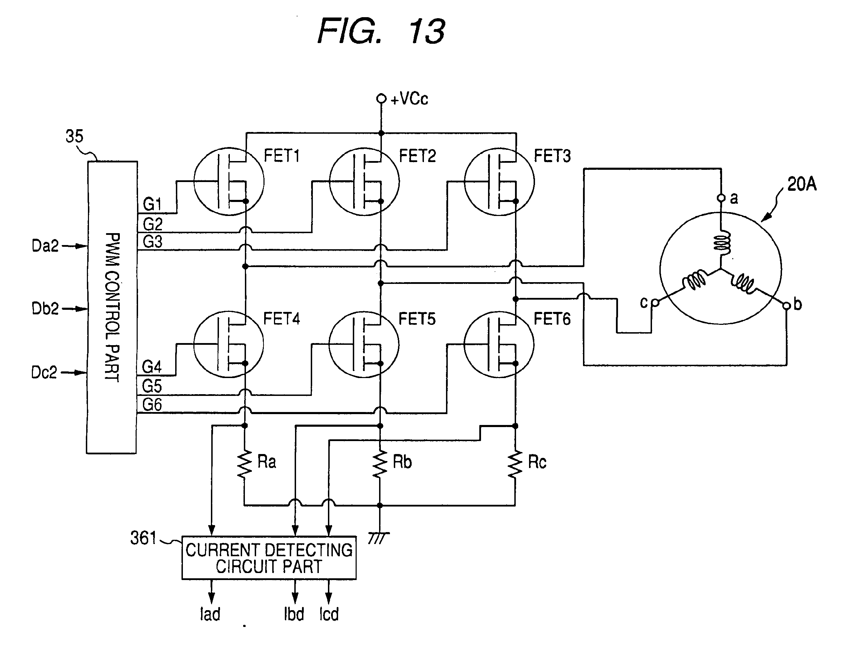

A detailed structural example of the inverter circuit 36 is shown in Fig. 13 and described. Driving of the three-phase motor 20A is controlled by turning on and off six field effect transistors (FET) FET1 to FET6 connected to a three-phase bridge circuit and the FET 1 to FET6 are respectively controlled to be turned on and off by the gate driving signals G1 to G6 as PWM signals from the PWM control part 35. To the PWM control part 35, the voltage command values Da2, Db2 and Dc2 are inputted from the PI control part 34. Further, to the lower stages of the phases of the three-phase bridge circuit respectively, current detecting resistances Ra to Rc are connected and the voltage of the respective phases is inputted to a current detecting circuit 361 so that motor currents of the respective phases are detected and outputted as current detected values lad to Icd.

In the controller for such an electric power steering device, when the current detecting resistances as current detecting means are respectively connected to the lower stages of the phases of the bridge circuit as shown in Fig. 13, a structure is simple and a cost is low. However, when the duty ratio of the FET 4 to the FET 6 of the lower stage is not higher than a prescribed value, there is a problem that the current cannot be accurately detected.

Techniques for avoiding the above-described problem are disclosed in Japanese Patent Unexamined Publication No. 10-54852 (Patent Document 1) and Japanese Patent No. 3674578 (Patent Document 2).

According to a method disclosed in the Patent document 1, in a method for detecting an output current of an inverter for converting output currents during operating the three-phase inverter having three-phase analog current detecting circuits into three-phase analog voltages by the three-phase analog current detecting circuit to detect the output current of the inverter, two phases whose turning off time of the driving signals of the semiconductor switching elements of a lower stage arm is short are sequentially selected in the main circuit of the three-phase inverter in accordance with an electric angle of the output voltage command of the inverter and the analog voltage corresponding to the selected two phases is digitally converted to detect the output current of the inverter. Further, in a device disclosed in the Patent Document 2, in a current detector of a three-phase inverter for detecting current values of phases respectively based on the voltage drop of current detecting resistance elements connected in series to lower stage arm elements in the lower-stage arm side of the phases of the three-phase inverter controlled by PWM, a current value determining part is provided for switching and using a first current value composed of a value of the voltage drop of the current detecting resistance element of a prescribed phase as a current value of the prescribed phase and a second current value as a value obtained by reversing the sign of the sum of the voltage drop of the current detecting resistance elements of two remaining phases under a prescribed condition and the current value determining part uses the first current value as the current value of the phase in which the duty ratio of the arm elements in the lower stage is not smaller than a small value lower than 30 % and uses the second current value as the current value of the phase in which the duty ratio of the arm elements in the lower stage is smaller than the small value lower than 30 %.

Both in the method of the above-described Patent Document 1 and the device of the Patent Document 2, the current value of the phase in which the current cannot be accurately detected is calculated by using the current detected value of other phase. However, there are not disclosed any specific examples in which it is decided whether or not the current of other phase is accurately detected and how the current value of the phase in which the current cannot be accurately detected is calculated. Namely, it is assumed that the current of (N-1) phases can be detected in an inverter of N (an integer of 2 or more) phases. However, means or a method thereof is not disclosed. Further, specific means is not disclosed when a current detected value is not precise due to a failure.

SUMMARY OF THE INVENTION

The present invention is devised in view of the above, and an object of the present invention is to provide a control method and a controller for a motor in which a current of at least (N-1) phases can be detected for a motor of N (an integer of 2 or more) phases, and even when the failure or the abnormality of a current detecting system of one phase is generated or the current detecting system of one phase is brought to an undetectable state, the current value of the phase of the failure or the phase of the undetectable state is estimated by specific means and a specific method by the use of the current detected value of other phase and a control is continuously carried out based on the estimated value and a controller for an electric power steering device using the controller for a motor.

In order to achieve the object, according to a first aspect of the present invention, a control method for a motor that calculates a voltage command value based on a difference between a current command value and a current detected value and controls a PWM the voltage command value, the control method comprises: detecting a failure or an undetectable state of a current detecting system; obtaining a current estimated value of a failure phase or an undetectable state phase based on the current detected value except the failure phase or the undetectable state phase when the failure or the undetectable state is detected; and continuously controlling the motor based on the current estimated value.

According to a second aspect of the present invention as set forth in the first aspect of the present invention, it may be adapted that the motor has N (an integer of 2 or more)phases and can detect a current of at least (N-1) phases.

According to a third aspect of the present invention as set forth in the first aspect of the present invention, it may be adapted that the voltage command value is restricted and subsequently the motor is controlled by the PWM.

According to a fourth aspect of the present invention as set forth in the first aspect of the present invention, it may be adapted that the failure or the undetectable state of the current detecting system is detected based on the voltage command value and an error between the current estimated value and the current detected value.

According to a fifth aspect of the present invention as set forth in the first aspect of the present invention, it may be adapted that the control method of a motor is applied to an electric power steering for a vehicle.

According to a sixth aspect of the present invention, a controller for a motor that calculates a first voltage command value based on a difference between a current command value and a current detected value and controls a PWM based on the first voltage command value, the controller comprises: a current estimating part that obtains a current estimated value based on the first voltage command value and the current detected value; and a current switching part that detects a failure or an undetectable state of a current detecting system by the current estimated value and the current detected value to output a feedback current detected value, wherein the feedback current detected value is set to be a current detected value for a difference, when the failure or the undetectable state is detected, the current estimated value of a failure phase or an undetectable state phase is obtained by using the current detected value except the failure phase or the undetectable state phase and the motor is continuously controlled based on the current estimated value.

According to a seventh aspect of the present invention as set forth in the sixth aspect of the present invention, it may be adapted that the controller further comprises a voltage command value restricting part that restricts the voltage command value, wherein a second voltage command value from the voltage command value restricting part is inputted to the current estimating part.

According to an eight aspect of the present invention as set forth in the sixth aspect of the present invention, it may be adapted that the motor has N (an integer of 2 or more) phases and can detect a current of at least (N-1) phases.

According to a ninth aspect of the present invention, a controller for an electric power steering device that calculates a current command value in accordance with a steering torque and a vehicle speed and controls a motor having N (an integer of 2 or more) phases by a PWM based on a voltage command value, the motor applying an assist force to the steering device based on the current command value, the controller comprises: a current estimating part that obtains a current estimated value based on the voltage command value and the current detected value of the motor; and a current switching part that switches a feedback current based on the current estimated value from the current estimating part and the current detected value. When a failure or an undetectable state of a current detecting system is detected, the current estimated value of a failure phase or an undetectable state phase is obtained by using the current detected value except the failure phase or the undetectable state phase and the motor is continuously controlled based on the current estimated value.

According to a tenth aspect of the present invention as set forth in the ninth aspect of the present invention, it may be adapted that the controller for an electric power steering device further comprises a voltage command value restricting part that restricts the voltage command value, wherein a restricted voltage command value from the voltage command value restricting part is inputted to the current estimating part.

According to an eleventh aspect of the present invention as set forth in the ninth aspect of the present invention, it may be adapted that the motor has N (an integer of 2 or more) phases and can detect a current of at least (N-1) phases.

According to control method and the controller for the motor according of the present invention, since the level of a voltage command value is restricted so that the current of at least (N-1) phases can be detected. The current of a phase that cannot be detected is estimated in accordance with prescribed expressions by using the current detected value of other phase and a control is continuously carried out by using the estimated current value, a motor control of high performance and high reliability can be realized.

Further, since the current is detected based on a current detecting resistance connected to the lower stage of a bridge circuit, a structure is simple and a cost is not increased. When the control method and the controller for the motor according to the present invention are applied to the electric power steering, even if one current detecting system generates the failure, the abnormality or the undetectable state, a steering operation can be continuously controlled. Thus, the electric power steering device of high reliability and high performance can be provided.

The present invention relates to a control method and a controller for a motor of N (an integer of 2 or more) phases and more particularly to a control method and a controller for an electric power steering device in which the levels of voltage command values of phases are respectively restricted so as to detect the current of at least (N-1) phases for a control system for controlling the motor of the N phases, and when a failure or an abnormality (hereinafter simply referred to as "failure") of a current detecting system is generated, the current of a phase that cannot be detected due to the failure is estimated from the current value of other phase in accordance with a prescribed expressions to continuously control the motor. Therefore, even when the current detecting system of one phase is failed or brought to an undetectable state, the control of the motor can be continuously carried out by a normal operation so that a control of high reliability and high performance can be realized.

In the present invention, a state that the current cannot be precisely detected due to a duty ratio is discriminated from a state that the current cannot be detected due to the failure of a circuit. A case that the current cannot be precisely detected irrespective of the duty ratio by which the current can be detected is considered as the "failure" or the "abnormality", and a case that the duty ratio makes it impossible to precisely detect the current is considered as the "undetectable state".

BRIEF DESCRIPTION OF DRAWINGS

Fig. 1 is a block diagram showing a structural example of one embodiment of the present invention;
Fig. 2 shows a part of a flowchart illustrating an operation example of the present invention;
Fig. 3 shows a part of a flowchart illustrating an operation example of the present invention;
Figs. 4A and 4B are a characteristic view for explaining the operation of the present invention;
Fig. 5 is a block diagram showing a structural example of a voltage command value restricting part;
Fig. 6 is a transfer function part showing an ordinary model of a motor;
Fig. 7 is a block diagram showing a detailed structural example of a current estimating part;
Fig. 8 is a block diagram showing another structural example of the current estimating part;
Fig. 9 is a block diagram showing a structural example of another embodiment of the present invention;
Fig. 10 is a block diagram showing a detailed structural example of a current estimating part;
Fig. 11 is a diagram showing a structural example of an ordinary electric power steering device;
Fig. 12 is a block diagram showing one example of a control unit; and
Fig. 13 is a connection diagram showing one example of an inverter circuit.

DESCRIPTION OF PREFERRED EMBODIMENTS

Now, an embodiment of the present invention will be described below with reference to the drawings.

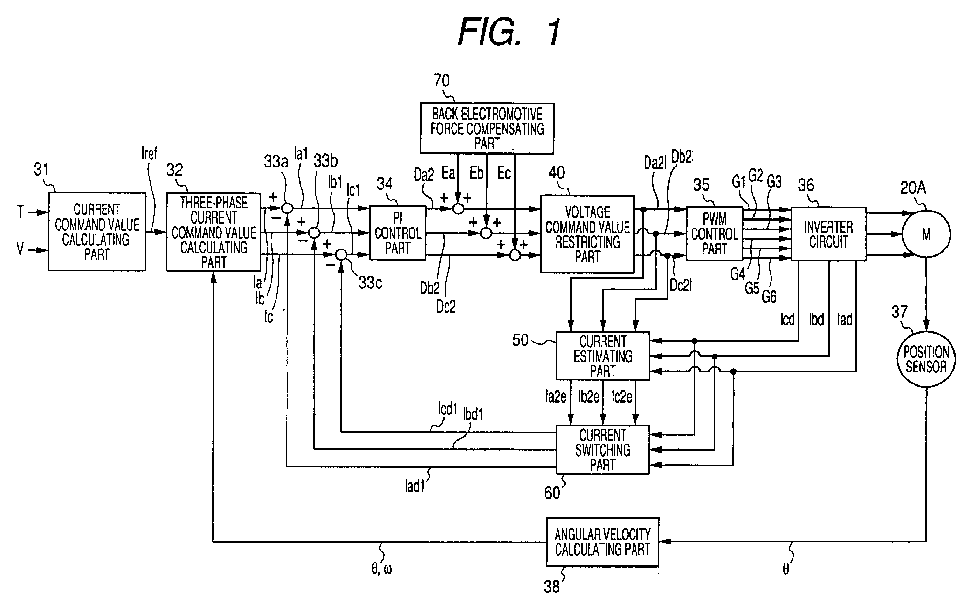

Fig. 1 shows the structure of one embodiment of the present invention so as to correspond to that of Fig. 12. A voltage command value restricting part 40, a current estimating part 50, a current switching part 60 and a back electromotive force compensating part 70 are newly provided. Specifically, voltage command values Da2, Db2 and Dc2 of three phases from a PI control part 34 are added to voltage compensated values Ea, Eb and Ec from the back electromotive force compensating part 70 and inputted to the voltage command value restricting part 40. The voltage command values Da21, Db21 and Dc21 restricted in the voltage command value restricting part 40 are inputted to a PWM control part 35 and inputted to the current estimating part 50 for estimating the current value of the motor of the current detecting system that is failed or brought to the undetectable state. Current estimated values Ia2e, Ib2e and Ic2e estimated in the current estimating part 50 are inputted to the current switching part 60. Further, the current detected values Iad, Ibd and Icd of motor current of the phases respectively detected in a current detecting circuit 361 in an inverter circuit 36 are inputted to the current estimating part 50 and the current switching part 60. The voltage command value restricting part 40 restricts the level of voltage so that the current of at least two phases can be detected. The detailed structural examples of the voltage command value restricting part 40, the current estimating part 50 and the current switching part 60 will be described below.

A compensation for a back electromotive force by the back electromotive force compensating part 70 relative to the voltage command values Da2, Db2 and Dc2 is carried out by a method as disclosed in, for instance, Japanese Patent Unexamined Publication No. 2005-199780.

If the voltage command values Da21 to Dc21 of the phases are respectively not larger than, for instance, a prescribed value #2 and the phase current can be normally detected, when an error between the current estimated values Ia2e to Ic2e and the current detected values Iad to Icd is not smaller than a prescribed value #3 and the voltage command values Da21 to Dc21 are not larger than the prescribed value #2, the failure of the current detecting system such as a current detecting resistance or the current detecting circuit 361 is decided to be the "failure". The current switching part 60 obtains the error between the current detected values Iad to Icd and the current estimated values Ia2e to Ic2e for each phase. In the case of the phase having the error of a prescribed value #1 or more, not the current detected values Iad to Icd, but the current estimated values Ia2e to Ic2e are fed back to subtracting parts 33a to 33c as feedback current values Iad1 to Icd1. In the case of the phase having the error under the prescribed value #1, the current detected values Iad to Icd are fed back to the subtracting parts 33a to 33c as the feedback current values Iad1 to Icd1.

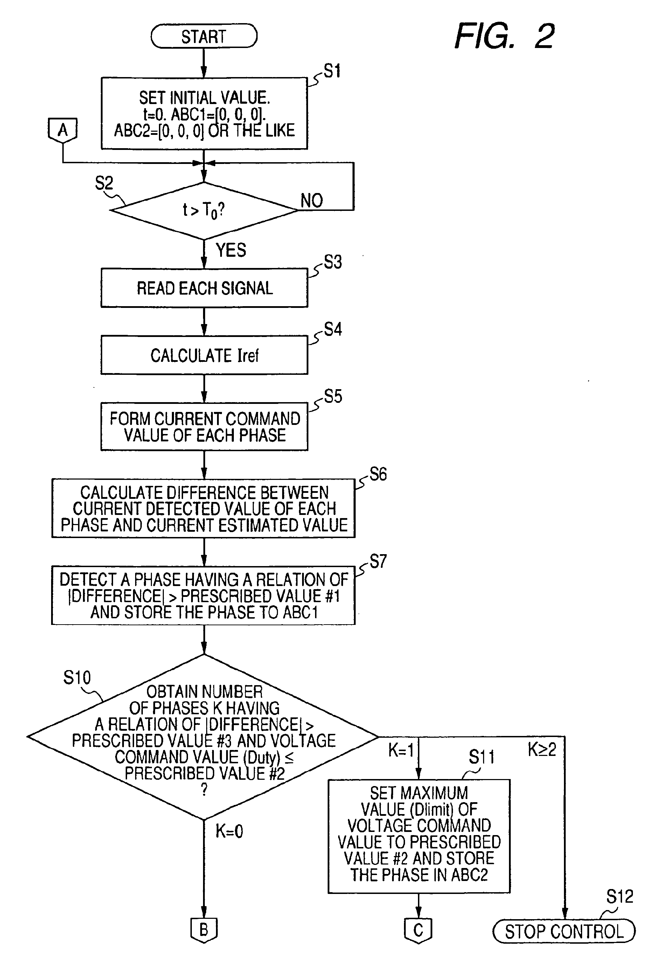

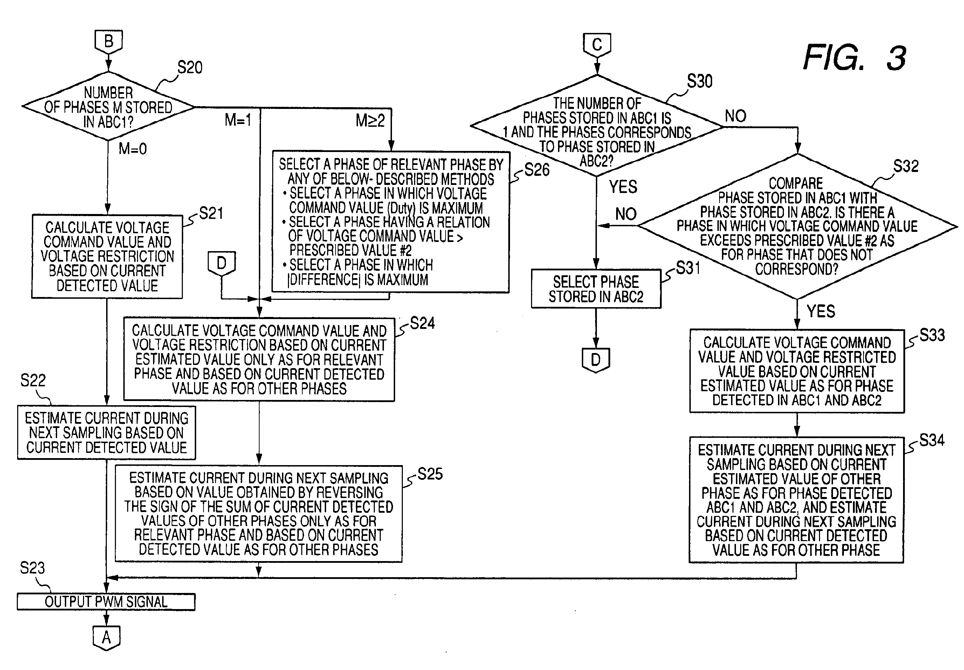

In the above-described structure, an operation is described by referring to flowcharts shown in Figs. 2 and 3.

Initially, a timer (time t = 0) or an initial value necessary for three phases ABC (for instance, an initial value of a memory showing a failure or an undetectable state of each phase in each sample time (ordinarily, "0")) is set (step S1). Wait until the timer exceeds a prescribed time $T_0$ (step S2). When the prescribed time $T_0$ elapses, a steering torque T, a vehicle speed V and the current detected values Iad, Ibd and Icd are read (step S3). A current command value calculating part 31 calculates a current command value Iref in accordance with the read steering torque T and the vehicle speed V (step S4). A three-phase current command value calculating part 32 calculates current command values Ia, Ib and Ic of respective phases in accordance with the current command value Iref, a motor angle $\theta$ and a motor angular velocity $\omega$ (step S5). The current switching part 60 calculates difference current values $\Delta Ia$ to $\Delta Ic$ between the current detected values Iad to Icd for the respective phases and the current estimated values Ia2e to Ic2e (step S6).

Then, the phase in which the absolute value of the difference current value ∆Ia to ∆Ic is larger than the prescribed value #1 is detected to store the phase in a memory ABC1 for observing the undetectable state (step S7). Further, the number of phases K is obtained in which the absolute value of the difference current value ∆Ia to ∆Ic is larger than the prescribed value #3 (> #1) and the voltage command values Da21 to Dc21 are not larger than the prescribed value #2 (step S10). When the error is large irrespective of the voltage command values Da21 to Dc21 under which the current can be detected, the current detecting system such as the current detecting resistance or the current detecting circuit 361 is considered to be failed. Accordingly, in the above-described step S10, when the number of the phases K is equal 0, the procedure moves to an operation of step s20 shown in Fig. 3. When the number of the phases K =1, a maximum value Dlimit of the voltage command value is set and store the phase decided to be failed in a memory ABC2 for observing the failure (step S11). In the case of K≥2, a control is stopped (step S12).

For instance, assuming that the memory ABC1 is an array, the array of the memory ABC1 indicates [1,0,0] (ABC1= [1,0,0]) that shows in order from the left a phase A, a phase B and a phase C, "1" represents "the difference > the prescribed value #1" and "0" represents "the difference ≤ the prescribed value #1". Similarly, assuming that the memory ABC2 is an array, the array of the memory ABC2 indicates [0, 1, 0] (ABC2= [0, 1, 0]) that shows in order from the left a phase A, a phase B and a phase C, and "1" represents "the difference > the prescribed value #3" and the state in which the current can be detected.

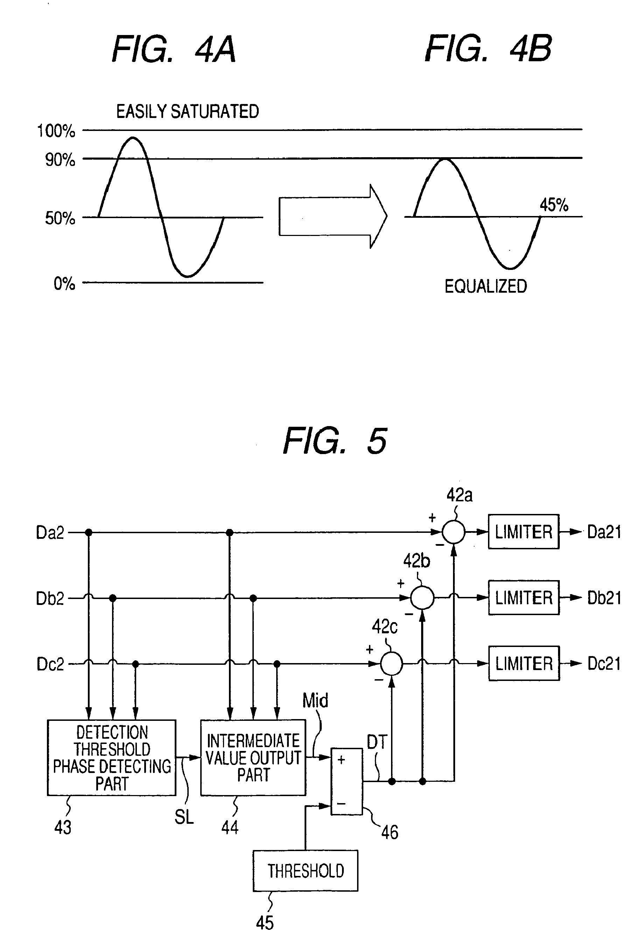

When the maximum value Dlimit of the voltage command value is, for instance, 90 %, the voltage command value is liable to be saturated and a current controller including an integrator is liable to be wound up (see Fig.4A). To prevent this phenomenon, the current command value Iref is desirably restricted. Further, the half of battery voltage is ordinarily set to a neutral point voltage, that is, the control is carried out by considering the duty ratio of 50% to be a reference, however, when the maximum value Dlimit of the voltage command value is 90 %, the control is carried out by considering the duty ratio of 45 % to be a reference as shown in Fig.4B. Further, when the control is stopped in the step S12, the control may be stopped by making a determination at several times without making a determination at one time.

In the above-described step S10, when it is decided that the number of the phases K is 0 (K=0), the number of the phases M stored in the memory ABC1 is decided (step S20). When it is decided that the number of the phases M is 0 (M=0), namely, when all the phases indicate | the current detected value - the current estimated value | ≤ the prescribed value #1, the current detected values Iad to Icd are fed back to the subtracting parts 33a to 33c. The PI control part 34 calculates the voltage command values Da2, Db2 and Dc2 in accordance with difference current values Ia1 to Ic1 from the subtracting parts 33a to 33c. The voltage command values whose back electromotive force is compensated in the back electromotive force compensating part 70 and adding parts are inputted to the voltage command value restricting part 40 and the voltage command value restricting part 40 calculates the restricted voltage command values Da21, Db21 and Dc21 (step S21). The current estimating part 50 estimates currents at a next sampling time in accordance with the voltage command values Da21, Db21 and Dc21 and the current detected values Iad, Ibd and Icd (step S22). The PWM control part 35 outputs the gate signals G1 to G6 of PWM signals (step S23) to return to the step S2.

On the other hand, in the step S20, when it is decided that the number of the phases M = 1, if the phase is, for instance, the phase A, the current estimated value Ia2e is used and the current detected values Ibd and Icd are used for two other phases (the phase B, the phase C) to calculate differences Ia1 to Ic1 from the current command values. The PI control part 34 calculates the voltage command values Da2, Db2 and Dc2 and the voltage command value restricting part 40 calculates the voltage command values Da21, Db21 and Dc21 (step S24). Then, the current estimating part 50 estimates currents at a next sampling time by using, only for the phase A, a value obtained by reversing the sign of the sum of the current detected values of other phases and the current detected values for other two phase (step S25), then go to the above-described step S23. Further, in the step S20, when it is decided that the number of the phases M is 2 or more (M≥2), any one of below-described (a) to (c) is selected to shift to the step S24 (step S26).

(a) Select the phase in which the voltage command value is maximum.
(b) Select the phase in which the voltage command value is larger than the prescribed value #2.
(c) Select the phase in which the absolute value of the difference current value is maximum.

Further, after the step S11, it is decided whether or not the number of the phases M stored in the memory ABC1 is 1 and the phase corresponds to the phase stored in the memory ABC2 (step S30). When the number of the phases M stored in the memory ABC1 is 1 and the phase corresponds to the phase stored in the memory ABC2, the phase stored in the memory ABC2 is selected (step S31), then go to the step S24. In the step S30, when the number of the phases M stored in the memory ABC1 is not "1" or the phases do not correspond to the phases stored in the memory ABC2 or both the cases are established, the phases stored in the memory ABC1 are compared with the phases stored in the memory ABC2. For the phases that do not correspond to each other, it is decided whether or not the phases are present in which the voltage command values Da21 to Dc21 exceed the prescribed value #2 (step S32). When there is a relevant phase, for the phase detected in the memory ABC1 and the memory ABC2, the voltage command values Da2 to Dc2 and Da21 to Dc21 are calculated by using the current estimated values Ia2e, Ib2e and Ic2e (step S33). For the phase detected in the memories ABC1 and ABC2, a current at a next sampling time is estimated based on the current estimated values Ia2e to Ic2e of other phases, and for other phases than the phase, a current at a next sampling time is estimated based on the current detected values (step S34), then go to the step S23. Further, in the above-described step S32, when there is no relevant phase, the procedure advances to the step S31.

The voltage command value restricting part 40 corrects the voltage command values Da2, Db2 and Dc2 so that the current of at least (N-1) phases can be normally detected. For instance, as shown in Fig. 5, a structure may be formed that includes a detection threshold phase detecting part 43 for detecting that the two phases of the voltage command values Da2, Db2 and Dc2 simultaneously reach a detection threshold value or higher in detecting the current by a three-phase downstream shunt system to output a threshold detecting signal SL, an intermediate value output part 44 for outputting an intermediate value Mid of the voltage command values Da2, Db2 and Dc2 when the threshold detecting signal SL is outputted, a comparing part 46 for obtaining a difference DT between the intermediate value Mid and the threshold 45 of a prescribed duty and subtracting parts 42a to 42c for subtracting the difference DT respectively from the voltage command values Da2, Db2 and Dc2.

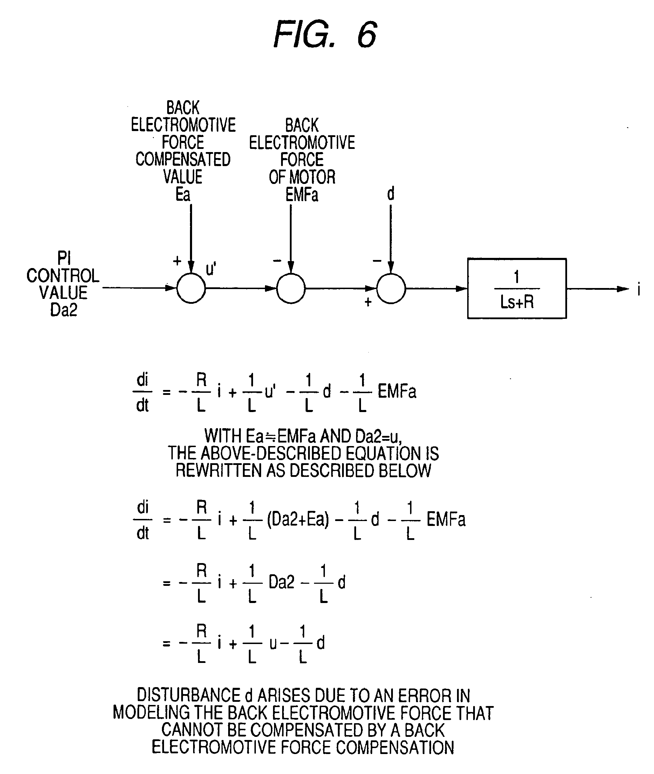

An ordinary model of a motor is expressed by a transfer function part shown in Fig. 6. When the voltage command value to the motor is expressed as u(k) and a motor current is expressed as y(k), the discrete-time state equation of the motor is expressed as a below-described Eq.(1), where x is a state variable, A is a system matrix, B is an input matrix and C is an output matrix (for outputting a measurable state amount from the state variable x). Further, when a sampling interval is expressed as $T_1$, x(k) is a state variable at a time $kT_1$ and x(k+1) is a state variable of a time $(k+1) T_1$.

$$x(k+1) = Ax(k) + Bu(k), \qquad y(k) = Cx(k) \qquad\qquad (1)$$

where $x(k) = \begin{bmatrix} i(k) \\ d(k) \end{bmatrix}$, i is a current value, d is a disturbance and C= [1 0]

Further, an observer is defined as a below-described Eq. (2) . A sign "over hat" expresses an estimated value. A difference between the estimated value and a real value is multiplied by a gain L and an obtained value is fed back so that the estimated value becomes close to the real value.

$$\hat{x}(k+1) = A\hat{x}(k) + Bu(k) + L(y(k) - \hat{y}(k)) \qquad\qquad (2)$$

Then, when the current is normally detected in accordance with the above-described Eq.(1) and Eq.(2), the difference between the estimated value and the detected value of the real value becomes decreased. When the difference is small, the detection is considered to be normal and the detected value is inputted to the observer of the Eq. (2) and a current of a next sampling time is estimated. In the case of the failure or under the undetectable state, since the difference between the estimated value and the detected value is increased, it is decided that the detection is not normal and the sum of the current detected values of other phases is inputted to the observer of the Eq. (2) and a current of a next sampling time is estimated. Namely, when the current detecting systems of all the phases are normal, the current detected values are used for the estimation. When the current cannot be detected due to the failure or the error arises, the current detected values of other phases are used to estimate a current using the observer expressed by the above-described Eq.(2). When the current detecting systems of at least the (N-1) phases can detect the current, the observer is established. That is, when the current of the (N-1) phases cannot be detected, the current of remaining one phase cannot be obtained. When the duty ratio by which the current detecting circuit (361) can detect the current is known, the duty ratio may be adjusted or restricted so that the duty ratios of at least the (N-1) phases satisfy that condition. When one phase is failed, a final output restricted value is set to, for instance, a range of 0 to the prescribed value #2 instead a range of 0 to 100 %, so that the current of all the phases except the failed phase can be detected. Thus, the control can be continuously carried out. Accordingly, in the present invention, for the phase in which the current cannot be detected, the current estimated value is used.

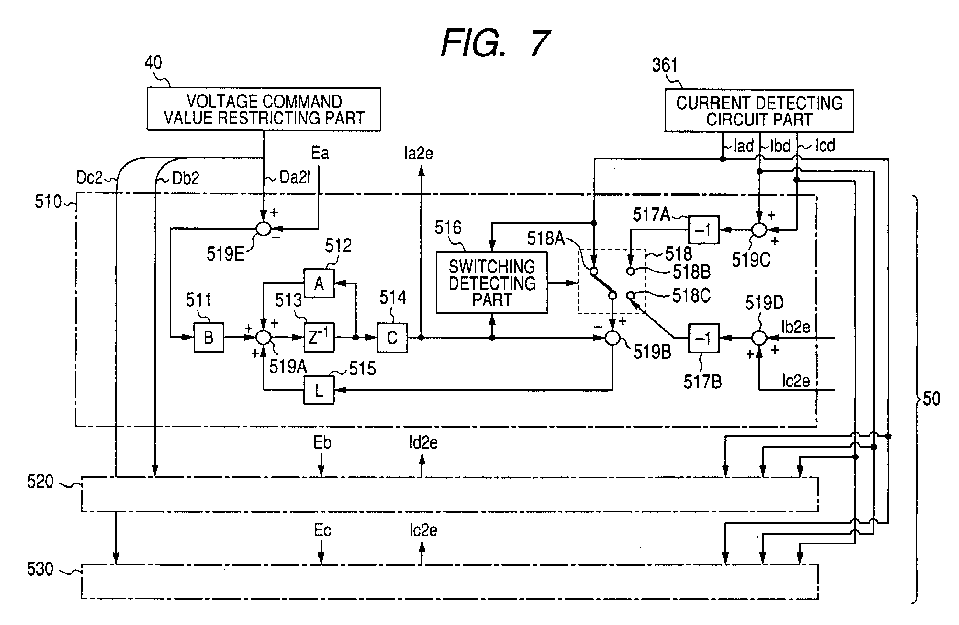

Fig. 7 shows a detailed circuit of the current estimating part 50. A current estimating part 510 for a phase a shown by a dashed line is specifically described. The structures of a current estimating part 520 for a phase b and a current estimating part 530 for a phase c are the same as the structure of the current estimating part 510. Only the voltage command values Da21 to Dc 21, the current detected values Iad to Icd, the voltage compensated values Ea to Ec and the current estimated values Ia2e to Ic2e that are inputted are different. In the current estimating part 510 shown in Fig. 7, the Eq. (2) is represented by a block diagram except a switching deciding part 516, a switching part 518, inverting parts 517A and 517B, adding parts 519C and 519D and a subtracting part 519E. The added result of an adding part 519A corresponds to x(k+1). A block 511 of the input matrix B shows that a difference between the voltage command value Da21 and the back electromotive force Ea is multiplied by the input matrix B and corresponds to Bu (k) of the Eq. (2). Further, a block 513 shows a unit delay part for the delay of one sampling, where a block 512 is the system matrix A, a block 514 is the output matrix C and a block 515 is the gain L. The voltage compensated value Ea is subtracted from the voltage command value Da21 from the voltage command value restricting part 40 in the subtracting part 519E and inputted to the block 511.

The current detected value Iad of one phase detected in the current detecting circuit 361 is inputted to a point 518A of the switching part 518. The current detected values Ibd and Icd of other phases are added in the adding part 519C, inverted in the inverting part 517A, and inputted to a point 518B of the switching part 518. The current estimated values Ib2e and Ic2e of other phases are added in the adding part 519D, inverted in the inverting part 517B and inputted to a point 518C of the switching part 518. The switching deciding part 516 switches the points 518A to 518C of the switching part 518 in accordance with the error between the current estimated value Ia2e and the current detected value Iad.

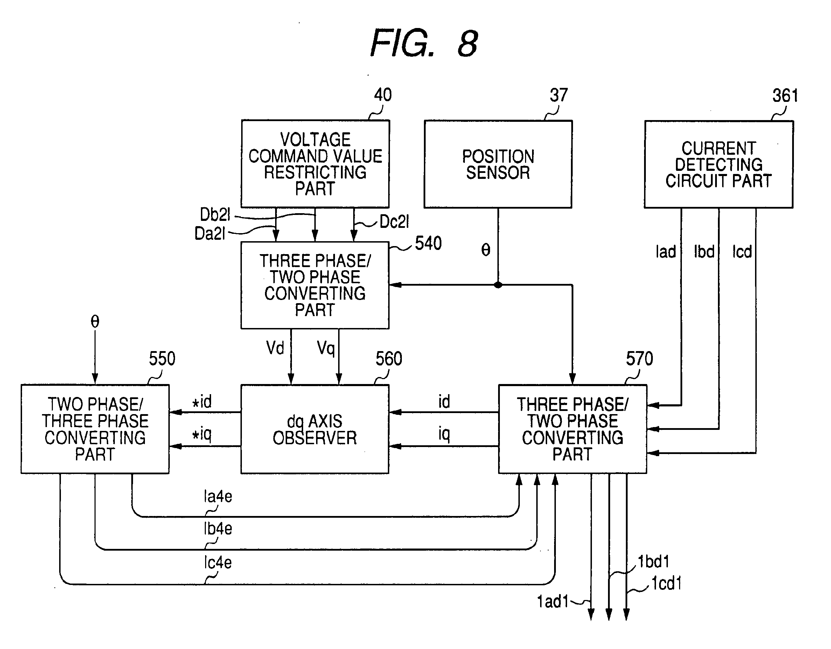

Fig. 8 shows other structural instance (vector control) of the current estimating part 50, an estimation may be carried out on dq axes and the current may be controlled for each phase or on the dq axes. The vector control is a control that a q axis for controlling a torque as an axis of coordinate of a rotor magnet of the motor and a d axis for controlling the strength of a magnetic field are independently set and the axes are direct to each other.

A dq axis current id and iq of the vector control is expressed as Eq. (3), where a resistance is R and an inductance is L.

$$\frac{d}{dt}\begin{bmatrix} i_d \\ i_q \end{bmatrix} = \begin{bmatrix} -\dfrac{R}{L} & -\omega \\ \omega & -\dfrac{R}{L} \end{bmatrix}\begin{bmatrix} i_d \\ i_q \end{bmatrix} + \begin{bmatrix} \dfrac{1}{L} & 0 \\ 0 & \dfrac{1}{L} \end{bmatrix}\begin{bmatrix} v_d \\ v_q \end{bmatrix} + \begin{bmatrix} 0 \\ \dfrac{\Psi}{L}\omega \end{bmatrix} \tag{3}$$

$\Psi$ in the Eq. (3) indicates $\sqrt{3}/2$ of the inter-linkage flux of an armature by a permanent magnet. Further, a model that considers a disturbance d is expressed as a below-described Eq. (4) and an estimated model of the form of Eq. (2) is obtained on the dq axes.

$$\frac{d}{dt}\begin{bmatrix} i_d \\ i_q \\ d_d \\ d_q \end{bmatrix} = \begin{bmatrix} -\dfrac{R}{L} & -\omega & -\dfrac{1}{L} & 0 \\ \omega & -\dfrac{R}{L} & 0 & -\dfrac{1}{L} \\ 0 & 0 & 0 & 0 \\ 0 & 0 & 0 & 0 \end{bmatrix}\begin{bmatrix} i_d \\ i_q \\ d_d \\ d_q \end{bmatrix} + \begin{bmatrix} \dfrac{1}{L} & 0 \\ 0 & \dfrac{1}{L} \\ 0 & 0 \\ 0 & 0 \end{bmatrix}\begin{bmatrix} v_d \\ v_q \end{bmatrix} + \begin{bmatrix} 0 \\ \dfrac{\Psi}{L}\omega \\ 0 \\ 0 \end{bmatrix} \tag{4}$$

The voltage command values Da21, Db21 and Dc21 of the three phases from the voltage command value restricting part 40 are inputted to a three phase/two phase converting part 540 and converted to voltage command values Vd and Vq of two phases. The voltage command values Vd and Vq are inputted to a dq axis observer 560. The current values Iad, Ibd and Icd of the three phases detected in the current detecting circuit 361 are inputted to a three phase/two phase converting part 570. The motor angle θ from a position sensor 37 is inputted to the three phase/two phase converting parts 540 and 570. The three phase/two phase converting part 570 outputs current values id and iq of two phases to input the current values to the dq axis observer 560. The three phase/two phase converting parts 540 and 570 are converted in accordance with a below-described Eq.(5).

$$\begin{bmatrix} i_d \\ i_q \end{bmatrix} = \sqrt{\frac{2}{3}} \begin{bmatrix} \cos(\theta) & \cos(\theta - \frac{2}{3}\pi) & \cos(\theta + \frac{2}{3}\pi) \\ -\sin(\theta) & -\sin(\theta - \frac{2}{3}\pi) & -\sin(\theta + \frac{2}{3}\pi) \end{bmatrix} \begin{bmatrix} i_a \\ i_b \\ i_c \end{bmatrix} \qquad (5)$$

Here, since one phase of the three phases can be obtained by a calculation from other two phases, for instance, id and iq can be obtained as ib = -(ia + ic).

The motor angle θ is also inputted to a two phase/three phase converting part 550 and current estimated values Ia4e, Ib4e and Ic4e of three phases converted in the two phase/three phase converting part 550 are inputted to the three phase/two phase converting part 570. When errors between the current detected values Iad to Icd and the current estimated values Ia4e to Ic4e are respectively not smaller than a prescribed value, the three phase/two phase converting part 570 decides that the current detecting system is failed, and outputs the current estimated values Ia4e to Ic4e as feedback current Iad1 to Icd1. The two phase/three phase converting part 550 is converted in accordance with a below-described Eq.(6).

$$\begin{bmatrix} i_a \\ i_b \\ i_c \end{bmatrix} = \sqrt{\frac{2}{3}} \begin{bmatrix} \cos(\theta) & -\sin(\theta) \\ \cos(\theta - \frac{2}{3}\pi) & -\sin(\theta - \frac{2}{3}\pi) \\ \cos(\theta + \frac{2}{3}\pi) & -\sin(\theta + \frac{2}{3}\pi) \end{bmatrix} \begin{bmatrix} i_d \\ i_q \end{bmatrix} \qquad (6)$$

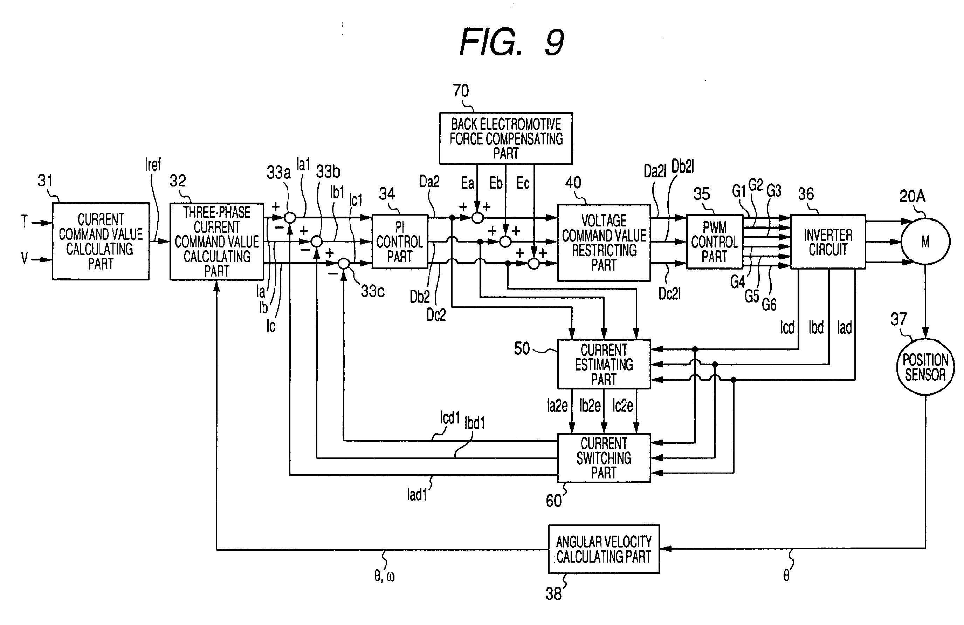

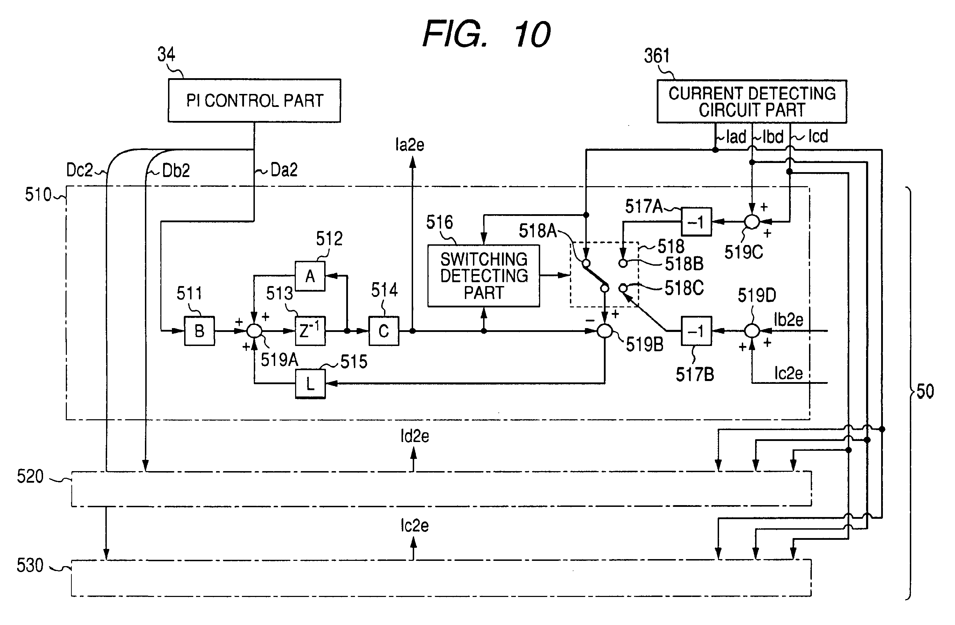

Fig. 9 shows another embodiment of the present invention correspondingly to Fig. 1. In this embodiment, voltage command values Da2 to Dc2 from a PI control part 34 are inputted to a current estimating part 50. The structure of the current estimating part 50 in this case is shown in Fig. 10. A similar control can be realized in this embodiment.

When the voltage command values are restricted by limiters of a final stage shown in Fig. 5, namely, when | an input value of the limiter - a restricted value | > 0, the (input value of the limiter - the restricted value) is subtracted from a value inputted to the block 511 of the current estimating part 50. Thus, a supply voltage to the motor is actually restricted by the limiter more than the command value.

Further, in the above-description, the control of the three-phase motor is explained. However, the present invention may be similarly applied to a motor of two phases or more. An instance of the three-phase current control under the three-phase control is described above, however, a remaining one phase may be obtained from current control values of other two phases under a two-phase current control, in such a way as expressed by a voltage command value B = - (a voltage command value A + a voltage command value C). In the above-described embodiment, in the case of the undetectable state, the current estimated values are used as a feedback current, however, a value obtained by reversing the sign of the sum of the current detected values of other phases may be used as a feedback current.

When the difference between the detected value and the estimated value is compared with the prescribed value, the prescribed value may be provided with a hysteresis. Since the current detected value has quantized noise, there is a fear that a chattering state is generated which needs to be frequently switched under the fixed prescribed value. To prevent the generation of the chattering state, the prescribed value is provided with the hysteresis.

Further, the control method and the controller for the motor can be applied to the electric power steering device and a steering control of high performance and high reliability can be realized.

While the invention has been described in connection with the exemplary embodiments, it will be obvious to those skilled in the art that various changes and modification may be made therein without departing from the present invention, and it is aimed, therefore, to cover in the appended claims all such changes and modifications as fall within the spirit and scope of the present invention.

**Claims**

1.  A control method for a motor that calculates a voltage command value based on a difference between a current command value and a current detected value and controls a PWM based on the voltage command value, the control method comprising:

    detecting a failure or an undetectable state of a current detecting system;
    obtaining a current estimated value of a failure phase or an undetectable state phase based on the current detected value except the failure phase or the undetectable state phase when the failure or the undetectable state is detected; and
    continuously controlling the motor based on the current estimated value.

2.  The control method for a motor according to claim 1, wherein the motor has N phases, N being an integer of 2 or more, and can detect a current of at least (N-1) phases.

3.  The control method for a motor according to claim 1, wherein the voltage command value is restricted and subsequently the motor is controlled by the PWM.

4.  The control method for a motor according to claim 1, wherein the failure or the undetectable state of the current detecting system is detected based on the voltage command value and an error between the current estimated value and the current detected value.

5.  A control method for an electric power steering, wherein the control method of a motor according to claim 1 is applied to an electric power steering for a vehicle.

6.  A controller for a motor that calculates a first voltage command value based on a difference between a current command value and a current detected value and controls a PWM based on the first voltage command value, the controller comprising:

    a current estimating part that obtains a current estimated value based on the first voltage command value and the current detected value; and
    a current switching part that detects a failure or an undetectable state of a current detecting system by the current estimated value and the current detected value to output a feedback current detected value,

    wherein the feedback current detected value is set to be a current detected value for a difference,
    when the failure or the undetectable state is detected, the current estimated value of a failure phase or an undetectable state phase is obtained based on the current detected value except the failure phase or the undetectable state phase and the motor is continuously controlled by using the current estimated value.

7.  The controller for a motor according to claim 6, further comprising:

    a voltage command value restricting part that restricts the voltage command value,

    wherein a second voltage command value from the voltage command value restricting part is inputted to the current estimating part.

8.  The controller for a motor according to claim 6, wherein
    the motor has N phases, N being an integer of 2 or more, and can detect a current of at least (N-1) phases.

9.  A controller for an electric power steering device that calculates a current command value in accordance with a steering torque and a vehicle speed and controls a motor having N phases, N being an integer of 2 or more, by a PWM based on a voltage command value, the motor applying an assist force to the steering device based on the current command value, the controller comprising:

    a current estimating part that obtains a current estimated value based on the voltage command value and the current detected value of the motor; and
    a current switching part that switches a feedback current based on the current estimated value from the current estimating part and the current detected value,

wherein when a failure or an undetectable state of a current detecting system is detected, the current estimated value of a failure phase or an undetectable state phase is obtained by using the current detected value except the failure phase or the undetectable state phase and
the motor is continuously controlled by using the current estimated value.

10. The controller for an electric power steering device according to claim 9, further comprising:

a voltage command value restricting part that restricts the voltage command value,

wherein a restricted voltage command value from the voltage command value restricting part is inputted to the current estimating part.

11. The controller for an electric power steering device according to claim 9,
wherein the motor has N phases, N being an integer of 2 or more, and can detect a current of at least (N-1) phases.

*FIG. 1*

# FIG. 2

```
                    ( START )
                        │
                        ▼
        ┌───────────────────────────────┐  S1
        │   SET INITIAL VALUE.           │
        │   t=0. ABC1=[0, 0, 0].         │
  [A]   │   ABC2=[0, 0, 0] OR THE LIKE   │
        └───────────────────────────────┘
                        │
                        ▼
  S2          ◇ ─────────────── ◇    NO
            <      t > T0?       >──────┐
              ◇ ─────────────── ◇       │
                        │ YES           │
                        ▼               │
        ┌───────────────────────────┐ S3
        │      READ EACH SIGNAL      │
        └───────────────────────────┘
                        │
                        ▼
        ┌───────────────────────────┐ S4
        │      CALCULATE Iref        │
        └───────────────────────────┘
                        │
                        ▼
        ┌───────────────────────────┐ S5
        │   FORM CURRENT COMMAND     │
        │    VALUE OF EACH PHASE     │
        └───────────────────────────┘
                        │
                        ▼
        ┌───────────────────────────────┐ S6
        │ CALCULATE DIFFERENCE BETWEEN   │
        │ CURRENT DETECTED VALUE OF EACH │
        │ PHASE AND CURRENT ESTIMATED VALUE│
        └───────────────────────────────┘
                        │
                        ▼
        ┌───────────────────────────────┐ S7
        │ DETECT A PHASE HAVING A RELATION OF│
        │ |DIFFERENCE| > PRESCRIBED VALUE #1 │
        │   AND STORE THE PHASE TO ABC1      │
        └───────────────────────────────┘
                        │
                        ▼
  S10            OBTAIN NUMBER
              OF PHASES K HAVING
            A RELATION OF |DIFFERENCE| >
          PRESCRIBED VALUE #3 AND VOLTAGE
            COMMAND VALUE (Duty) ≤
              PRESCRIBED VALUE #2
                        ?
```

$t > T_0?$

- K=0 → (B)
- K=1 → S11: SET MAXIMUM VALUE (Dlimit) OF VOLTAGE COMMAND VALUE TO PRESCRIBED VALUE #2 AND STORE THE PHASE IN ABC2 → (C)
- K≥2 → S12: ( STOP CONTROL )

# FIG. 3

**B** → S20 NUMBER OF PHASES M STORED IN ABC1?

- M=0 → S21 CALCULATE VOLTAGE COMMAND VALUE AND VOLTAGE RESTRICTION BASED ON CURRENT DETECTED VALUE → S22 ESTIMATE CURRENT DURING NEXT SAMPLING BASED ON CURRENT DETECTED VALUE

- M=1 → **D** → S24 CALCULATE VOLTAGE COMMAND VALUE AND VOLTAGE RESTRICTION BASED ON CURRENT ESTIMATED VALUE ONLY AS FOR RELEVANT PHASE AND BASED ON CURRENT DETECTED VALUE AS FOR OTHER PHASES → S25 ESTIMATE CURRENT DURING NEXT SAMPLING BASED ON VALUE OBTAINED BY REVERSING THE SIGN OF THE SUM OF CURRENT DETECTED VALUES OF OTHER PHASES ONLY AS FOR RELEVANT PHASE AND BASED ON CURRENT DETECTED VALUE AS FOR OTHER PHASES

- M≥2 → S26 SELECT A PHASE OF RELEVANT PHASE BY ANY OF BELOW- DESCRIBED METHODS
  - SELECT A PHASE IN WHICH VOLTAGE COMMAND VALUE (Duty) IS MAXIMUM
  - SELECT A PHASE HAVING A RELATION OF VOLTAGE COMMAND VALUE > PRESCRIBED VALUE #2
  - SELECT A PHASE IN WHICH |DIFFERENCE| IS MAXIMUM

S23 OUTPUT PWM SIGNAL → **A**

**C** → S30 THE NUMBER OF PHASES STORED IN ABC1 IS 1 AND THE PHASES CORRESPONDS TO PHASE STORED IN ABC2?

- YES / NO → S31 SELECT PHASE STORED IN ABC2 → **D**

- NO → S32 COMPARE PHASE STORED IN ABC1 WITH PHASE STORED IN ABC2. IS THERE A PHASE IN WHICH VOLTAGE COMMAND VALUE EXCEEDS PRESCRIBED VALUE #2 AS FOR PHASE THAT DOES NOT CORRESPOND?

- YES → S33 CALCULATE VOLTAGE COMMAND VALUE AND VOLTAGE RESTRICTED VALUE BASED ON CURRENT ESTIMATED VALUE AS FOR PHASE DETECTED IN ABC1 AND ABC2 → S34 ESTIMATE CURRENT DURING NEXT SAMPLING BASED ON CURRENT ESTIMATED VALUE OF OTHER PHASE AS FOR PHASE DETECTED ABC1 AND ABC2, AND ESTIMATE CURRENT DURING NEXT SAMPLING BASED ON CURRENT DETECTED VALUE AS FOR OTHER PHASE

14

## FIG. 4A

EASILY SATURATED

100%
90%
50%
0%

## FIG. 4B

90%
45%

EQUALIZED

## FIG. 5

Da2 — LIMITER → Da21

42a

Db2 — LIMITER → Db21

42b

Dc2 — LIMITER → Dc21

42c

DETECTION THRESHOLD PHASE DETECTING PART
43

SL

INTERMEDIATE VALUE OUTPUT PART
44

Mid

DT

46

THRESHOLD
45

# FIG. 6

BACK
ELECTROMOTIVE
FORCE
COMPENSATED
VALUE
Ea

BACK
ELECTROMOTIVE
FORCE
OF MOTOR
EMFa

d

PI
CONTROL
VALUE
Da2

$$\frac{1}{Ls+R}$$

i

$$\frac{di}{dt} = -\frac{R}{L}i + \frac{1}{L}u' - \frac{1}{L}d - \frac{1}{L}EMFa$$

WITH Ea≒EMFa AND Da2=u,
THE ABOVE-DESCRIBED EQUATION IS
REWRITTEN AS DESCRIBED BELOW

$$\frac{di}{dt} = -\frac{R}{L}i + \frac{1}{L}(Da2+Ea) - \frac{1}{L}d - \frac{1}{L}EMFa$$

$$= -\frac{R}{L}i + \frac{1}{L}Da2 - \frac{1}{L}d$$

$$= -\frac{R}{L}i + \frac{1}{L}u - \frac{1}{L}d$$

DISTURBANCE d ARISES DUE TO AN ERROR IN
MODELING THE BACK ELECTROMOTIVE FORCE THAT
CANNOT BE COMPENSATED BY A BACK
ELECTROMOTIVE FORCE COMPENSATION

## FIG. 7

40 — VOLTAGE COMMAND VALUE RESTRICTING PART

361 — CURRENT DETECTING CIRCUIT PART

Iad  Ibd  Icd

Ea

Ia2e

Dc2  Db2  Da2l

510

519E

516 — SWITCHING DETECTING PART

517A  −1

518A  518  518B  518C

519C

512  A

511  B  519A  513  Z⁻¹  514  C  519B  519D

515  L

517B  −1  Ib2e

Ic2e

520

Eb  Id2e

530

Ec  Ic2e

50

EP 1 865 594 A2

## FIG. 8

```
                    40                    37                       361
        ┌──────────────────┐   ┌──────────────┐          ┌──────────────────┐
        │     VOLTAGE      │   │              │          │     CURRENT      │
        │ COMMAND VALUE    │   │   POSITION   │          │    DETECTING     │
        │  RESTRICTING     │   │    SENSOR    │          │  CIRCUIT PART    │
        │      PART        │   │              │          │                  │
        └──────────────────┘   └──────────────┘          └──────────────────┘
   Db2I─╮  │      │     │             │                     Iad│  Ibd│  Icd│
   Da2I─╯  │      │     ╰─Dc2I        │                       │     │     │
           ▼      ▼     ▼    ╭─540     │θ                     │     │     │
        ┌──────────────────┐          │                      │     │     │
        │  THREE PHASE/    │          │                      │     │     │
        │   TWO PHASE      │◄─────────┤                      │     │     │
        │  CONVERTING      │          │                      │     │     │
        │     PART         │          │                      │     │     │
        └──────────────────┘          │                      │     │     │
              │Vd    │Vq              │                      │     │     │
   θ          ▼      ▼    ╭─560        │         ╭─570        │     │     │
   │  ╭─550                           │                      │     │     │
   ▼  ┌──────────────┐   ┌──────────┐  id   ┌──────────────┐ │     │     │
   │  │  TWO PHASE/  │*id│          │◄──────│ THREE PHASE/ │◄┘     │     │
   └─►│ THREE PHASE  │◄──│  dq AXIS │       │  TWO PHASE   │◄──────┘     │
      │ CONVERTING   │   │ OBSERVER │  iq   │  CONVERTING  │◄────────────┘
      │    PART      │*iq│          │◄──────│     PART     │
      └──────────────┘◄──└──────────┘       └──────────────┘
          │   │   │                           ▲   ▲   ▲  │  │  │
          │   │   │   Ia4e                     │   │   │  │  │  │
          │   │   └───────────────────────────┘   │   │  │  │  │
          │   │       Ib4e                         │   │  │  │  │
          │   └───────────────────────────────────┘   │  │  │  │
          │           Ic4e                             │  │  │  │
          └───────────────────────────────────────────┘  │  │  │
                                                   1ad1─╮ │  │  ╰─1cd1
                                                        ▼ ▼  ▼
                                                        1bd1─╯
```

EP 1 865 594 A2

*FIG. 9*

FIG. 10

EP 1 865 594 A2

## FIG. 11

FIG. 12

EP 1 865 594 A2

# FIG. 13

**EP 1 865 594 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006161297 A
- JP 10054852 A
- JP 3674578 B
- JP 2005199780 A